# EUROPEAN PATENT SPECIFICATION

(11) **EP 2 972 727 B1**
(45) Date of publication and mention of the grant of the patent: **16.08.2017**
(21) Application number: 14780061.9
(22) Date of filing: 06.03.2014
(51) Int. Cl.: G06F 3/048

(54) **NON-OCCLUDED DISPLAY FOR HOVER INTERACTIONS**
NICHT BLOCKIERTE ANZEIGE FÜR HOVER-INTERAKTIONEN
AFFICHAGE NON OCCULTÉ POUR INTERACTIONS PAR SURVOL

(30) Priority: 13.03.2013 US 201313799960
(43) Date of publication of application: 20.01.2016
(73) Proprietor: Amazon Technologies, Inc., Reno, NV 89507 (US)
(72) Inventor: STRUTT, Guenael Thomas, Seattle, Washington 98109 (US); ZHOU, Dong, Seattle, Washington 98109 (US); POLANSKY, Stephen Michael, Seattle, Washington 98109 (US); BELL, Matthew Paul, Seattle, Washington 98109 (US); NOBLE, Isaac Scott, Seattle, Washington 98109 (US); WEBER, Jason Robert, Seattle, Washington 98109 (US)
(74) Representative: J A Kemp
(86) International application number: PCT/US2014/021441
(87) International publication number: WO 2014/164235

(56) References cited:
- US-A1- 2006 161 846
- US-A1- 2006 161 846
- US-A1- 2011 279 397
- US-A1- 2011 279 397
- US-A1- 2012 087 545
- US-A1- 2012 087 545
- US-A1- 2012 120 063
- US-A1- 2012 120 063

## Description

### BACKGROUND

A popular feature of many portable computing devices, such as smart phones, tablets, laptops, and portable media players, is the touchscreen, which allows users to directly interact with their devices in new and interesting ways. There are, however, certain drawbacks to the touchscreen. The surfaces of touchscreens require cleaning more often and some users find the electrical contact between the user's fingertip and the touchscreen uncomfortable, particularly after an extended period of use. In addition, certain tasks can be difficult for some users to perform on touchscreens and some interactions are less than optimal for the user. For example, new users may be unaccustomed to various features, functions, and applications incorporated in the devices, and can only familiarize themselves by trial and error. In other instances, a display area that may already be small to begin with can become even more limited when the user is required to interact with their devices by touch.
US 2006/161846 A1 discloses a user interface in which an area around a touch position of a pointing object is displayed elsewhere on the display screen.
According to the present invention there is provided a computer-implemented method for displaying information and a computing device as defined in the appended claims.

Various embodiments in accordance with the present disclosure will be described with reference to the drawings, in which:
**FIG. 1** illustrates an example approach for non-occluded display of data associated with a hover interaction that can be utilized in accordance with various embodiments;
**FIG. 2** illustrates another example approach for non-occluded display of data associated with multiple hover interactions that can be utilized in accordance with various embodiments;
**FIGS. 3(a), 3(b), 3(c),** and **3(d)** illustrate an example process for determining one or more characteristics of a user with respect to a computing device that can be utilized in accordance with various embodiments;
**FIG. 4** illustrates an example approach for determining whether data to be displayed at a particular location may be occluded that can be utilized in accordance with various embodiments;
**FIG. 5** illustrates another example approach for determining whether data to be displayed at a particular location may be occluded that can be utilized in accordance with various embodiments;
**FIG. 6(a)** and **6(b)** illustrate another example approach for determining whether data to be displayed at a particular location may be occluded that can be utilized in accordance with various embodiments;
**FIG. 7** illustrates an example process for non-occluded display of data associated with a hover interaction that can be utilized in accordance with various embodiments
**FIG. 8** illustrates an example set of components that can be utilized in a device such as that illustrated in **FIG. 7**; and
**FIG. 9** illustrates an example an environment in which various embodiments can be implemented.

### DETAILED DESCRIPTION

Users of personal and portable electronic devices often expect to be able to perform most (if not all) computing tasks from their portable electronic devices if the task can be performed by desktops, workstations, and servers. However, differences such as display size and approaches to user input, among others, can sometimes make it more difficult to perform certain tasks on smaller devices. For instance, web browsing on smaller devices can sometimes be less than ideal because many websites are designed with desktop displays in mind. Users may have to constantly scroll left or right, top to bottom to review some website content. In addition, certain websites group hyperlinks very close together such that users can often select an undesired hyperlink. Another example is text creation and editing. Users may find typing on portable electronic devices frustrating because the keyboard keys are typically smaller than the user's fingertips such that unintended keys are often pressed. Yet another example is the general lack of availability of tooltips, hover boxes, previews, and other such interfaces for personal devices. These approaches allow users to hover over an object of a user interface to obtain information about the object or what the object will do, and can be very helpful for many users. When such functionality is provided at all, conventional devices may fail to take into account that the presentation of tooltips, hover boxes, and other such interfaces, may be occluded by the user's finger, hand, or other physical features of the user.

Systems and methods in accordance with various embodiments of the present disclosure may overcome one or more of the aforementioned and other deficiencies experienced in conventional approaches for displaying data and/or enabling user input. In particular, various embodiments enable a computing device to recognize when a user's finger, hand, stylus, digital pen, or other such object hovers over or is within a determined distance of a user interface element. Some of the user interface elements may be configured to display data upon detection of a hover input or when the object is within the determined distance of the user interface element. When the data is displayed, certain approaches of various embodiments ensure that at least substantive portions of the data are displayed without being occluded or obscured, for example, by the user's finger, hand, or other such object.

Many other alternatives and variations are described and suggested below in relation to at least some of the various embodiments.

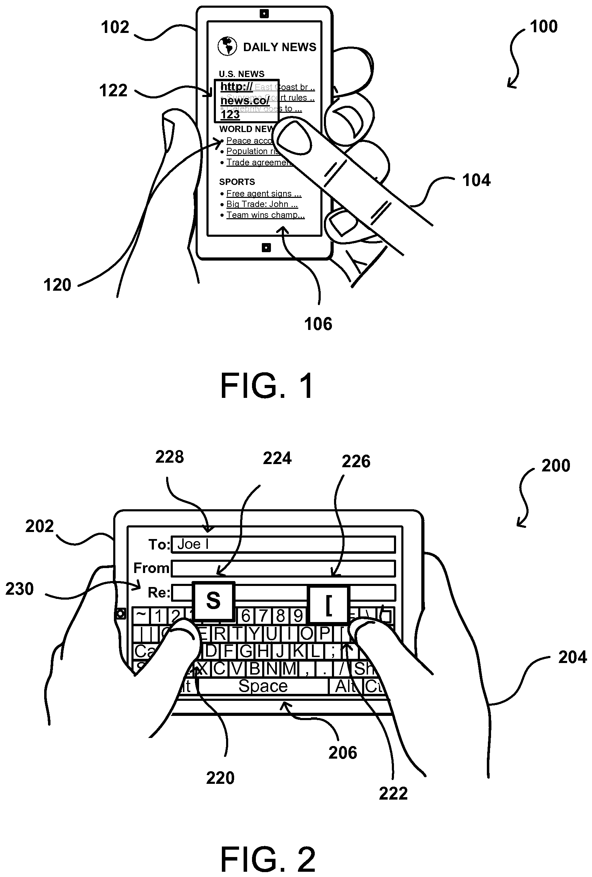

**FIG. 1** illustrates an example situation **100** of a hover interaction wherein a portable computing device **102** is displaying data associated with an element of a user interface that is hovered upon or within a determined distance in accordance with various embodiments. Although a portable computing device **102** (*e.g.,* a portable media player, smart phone, or tablet) is shown that can be held in a user's hand, it should be understood that other types of computing devices can utilize aspects of the various embodiments as should be apparent in light of the teachings and suggestions contained herein. A hover interaction is a feature of a pointer-enabled user interface wherein movement of the pointer (e.g., cursor, finger, stylus, or object) toward an element of the user interface (e.g., buttons, tool icons, hyperlinks) and stationing the pointer for a determined period of time at the element and within a determined distance can be interpreted by a computing device as a "hover input." Typically, the user interface presents information about the element the pointer is hovering over (e.g., an application name, a toolbar function, a description of the computing tasks that will be performed). Oftentimes, the elements that can be hovered upon are selectable elements, i.e., the element can be clicked on or touched. But some hover interactions are selections in themselves. For example, certain hover interactions only require the user to move over an element for even the barest minimum of time and specified computing tasks may be performed, sometimes without the user necessarily aware that those tasks are being performed.

A conventional approach to hover interactions is a mouseover event in a desktop web browser, wherein a hover input, such as the user maintaining a mouse cursor over a hyperlink, may result in a display of the URL in the status bar of the web browser. Certain conventional web browsers can also display the title and/or alt attribute of a hyperlink as a tooltip next to the hyperlink when the user hovers over the hyperlink for a period of time. Conventional browsers that support tabbing can display the full title of a web page corresponding to a tab when the user hovers over the tab. Some web browsers also support hover interactions of websites that define their own mouseovers using JavaScript® or Cascade Style Sheets (CSS). For instance, hovering over certain objects of a webpage of the website may result in the object changing color, a border being added around an object, or a tooltip to appear next to the object.

Other conventional approaches for hover interactions are implemented by certain desktop software applications and desktop operating systems (OS's) with GUIs. Desktop software applications can provide tooltips when a user hovers over certain selectable objects or elements (e.g., buttons, toolbar or ribbon icons, menu options, palettes) of the respective programs. Tooltips can provide information to the user about the computing task(s) associated with the objects or elements. Other desktop applications, such as word processors, spreadsheet programs, image editing software, or presentation programs, use an approach for hover interactions that enable the user to select editable content and then hover over a stylistic or graphical tool without committing to changes to preview what the selected editable content would look like if the user selected the computing task(s) associated with the tool (e.g., bold, italicize, underline, color, image effect). Hover interactions are also supported by some desktop OS's. For example, in certain desktop OS's, hovering over an icon corresponding to hard drives, peripheral devices, network drives, applications, folders, files, etc. may provide information about these objects, such as the full name, contents, location, date of creation, size, file type, etc. In addition, desktop OS's may support hover interactions via one or more application programming interfaces that can standardize how a hover input is detected and the computing task(s) to perform when a hover input is detected.

In **FIG. 1**, the computing device **102** can be seen running a web browser which renders content from a website for display on the touchscreen **106** of the computing device. In this example, the user's finger **104** hovers over a user interface element **120**, a hyperlink to another webpage, at a distance of approximately 2.54 cm or 1.0" and for a period of at least 500 ms without the finger physically touching the display screen **106**. In various embodiments, minimum and maximum threshold distances and durations of times can be used based on the stability, accuracy, and sensitivity of device sensors; considerations for user experience; and other factors known by those of skill in the art. Once this hover input is determined or the user's finger is detected to be within a specified distance of the user interface element 120, a hover box **122**, i.e., a URL corresponding to the user interface element **120**, is displayed on the display screen **106**. The hover box **122** may be provided, for example, to help the user differentiate between selection of the user interface element **120** from other selectable elements (e.g., hyperlinks) of the website prior to committing to the selection. This can be particularly helpful for the user, as here, the hyperlinks are bunched close together and the user's fingertip is large enough that he may select the wrong hyperlink without the aid of the hover box **122**. In addition, the hover box **122** is semi-transparent to provide the user at least some context of the original content prior to display of the hover box. The hover box **122** is also positioned such that its bottom right corner is located just above the topmost point of the user's finger **104** so that the entirety of the hover box is visible to the user from a perspective of the user face on with the device. In other embodiments, some portions of a tooltip or hover box, such as those lacking substantive content, may be partially obscured by the user. These characteristics of the hover box **122** (e.g., degree of transparency, position), among others (e.g., size, content, etc.), may be specifiable by any of the user, the website designer, the browser application provider, the operating system provider, a device manufacturer, or some combination thereof. For example, a website designer may design a webpage for a desktop browser and specify the title attribute for an HTML element with the expectation that hovering over the element will provide a tooltip with the text of the title rendered according to the default look and feel and at a position rendered by the desktop browser. A mobile browser application provider may interpret a title attribute to create a hover box in a style similar to the one depicted in **FIG. 1**, except as opaque by default. The user may adjust browser settings to display the hover box **122** semi-transparently as a personal preference. Various alternative combinations can be implemented in accordance with various embodiments, as will be appreciated by one of ordinary skill in the art.

Although **FIG. 1** provides an example of enabling non-occluded display of data for hover interactions in the context of a web browser, the various approaches described in **FIG. 1** are equally applicable for other software applications and operating systems. For instance, **FIG. 2** illustrates a situation **200** wherein data respectively associated with multiple user interface elements is displayed in a non-occluded manner in response to two hover inputs, each corresponding respectively to two of the user interface elements, being received by a computing device **202** in accordance with various embodiments. In this example, a user **204** can be seen operating a computing device **202** that is displaying a virtual keyboard and an email program on a touch display interface **206**. More specifically, the user's left thumb is hovering over (or within a determined distance of) user interface element **220** (i.e., virtual keyboard key "S") and a hover box **224** is provided overlaying the virtual keyboard and email program and the user's right thumb is hovering over user interface element **222** (i.e., virtual keyboard key "[") and a hover box **226** is displayed over the virtual keyboard and email program. In one embodiment, the hover boxes for each virtual key is larger than a user's fingertip (e.g., 0.50"x0.50" or 1.27 cm x 1.27 cm). In another embodiment, the size of hover boxes can be based on the size of a specific user's fingertip (or thumb profile).

Certain conventional systems and approaches may rely only on capacitive sensors based on self-capacitance to enable hover interactions, which limits these conventional systems and methods to single hover detection because of the ghosting effect. As will be discussed in further detail below, approaches in accordance with various embodiments can overcome this deficiency by using image analysis, at least in part, for detecting hover inputs. Thus, in at least some embodiments, as demonstrated in **FIG. 2**, a computing device can be configured to detect multiple hover interactions corresponding respectively to multiple user interface elements and display data associated with the user interface elements when it is determined that the user interface elements have been hovered upon.

**FIG. 2** further illustrates that the data to be displayed when a user hovers over a user interface element can be based on the "handedness" hovering over the element. Here, hover box **224** can be seen offset to right left of the left thumb of the user **204** and hover box **226** is offset to the left of the right thumb. Thus, in at least some embodiments, determining the location of where to display data for a detected hover input can be based at least in part on which of the user's hand hovered over the user interface element associated with the data for display. Further, it should be understood that terms such as "right" and "left" are used for clarity of explanation and are not intended to require specific orientations unless otherwise stated. In addition, it will be appreciated that hover boxes **224** and **226** do not overlap any portion of the display screen **206** over which the finger is hovering. Certain conventional approaches for hover interactions may "magnify" a virtual key at the key's position on the virtual keyboard but, at least as seen in the case of the key **220**, such an approach may be undesirable since a substantial portion of the virtual key would remain occluded. An approach, such as one illustrated in **FIG. 2** may overcome this deficiency. As discussed elsewhere herein, some embodiments allow for non-substantive portions of data associated with hover interactions to be occluded by the user, such as corners and borders of tooltips, hover boxes, and other such graphical elements. Other embodiments allow for substantive portions of data associated with hover interactions to be occluded by the user if the displayed data is large enough to provide the user with sufficient context despite a portion of the data being obscured by the user.

In some embodiments, consideration of an active area of a GUI may also determine where hover boxes are to be located when a user hovers over certain elements of the GUI. In various embodiments, the active area of the GUI may correspond to a location of a text cursor. For example, in **FIG. 2**, an active area of the GUI is indicated by a blinking text cursor **228** at the "To" line of the email program. In some situations, the user may change the active area to be the "Re" line **230** of the email program. In such a situation, the preferred placement of the hover boxes **224** and **226**, i.e., above the user's thumbs, may no longer be as ideal because the hover boxes would occlude the "Re" line **230**. In that event, the hover boxes may instead be located, for example, below the user's thumbs. Other examples of active areas of a user interface may include input form fields, a browser address bar, a search field bar, etc. Thus, various embodiments can also determine an active area of the user interface when selecting locations for hover boxes.

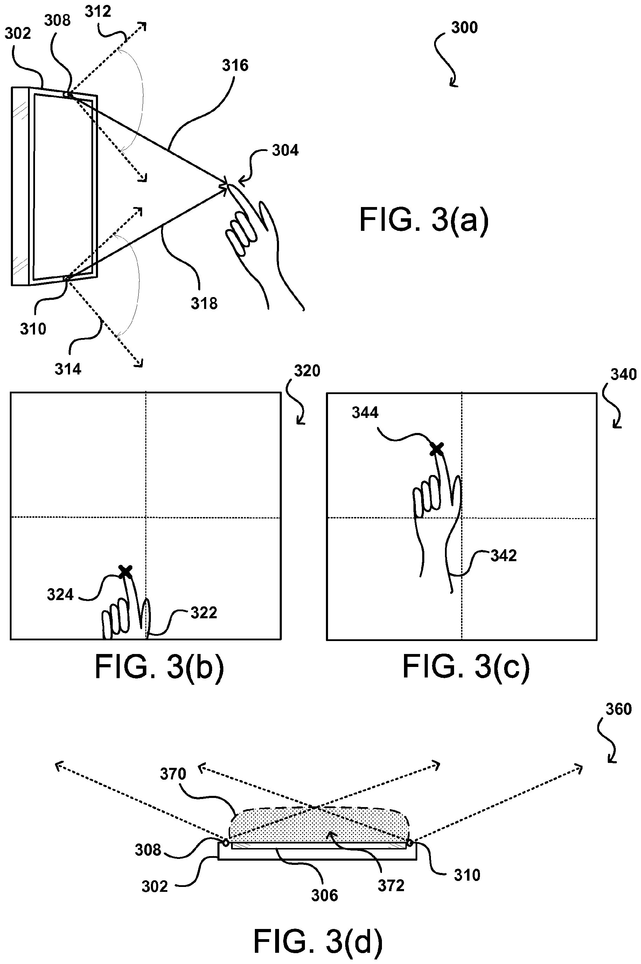

In order to determine whether an object (e.g., user's finger, stylus, digital pen, etc.) is within a determined distance of a user interface element displayed on a display or other such element of a computing device, a number of potential approaches can be used. **FIGS. 3(a), (b), (c),** and **(d)** illustrate an example of an approach to determining a relative distance and/or location of at least one object, i.e., a user's finger that can be utilized in accordance with various embodiments. In this example, input can be provided to a computing device **302** by monitoring the position of the user's fingertip **304** with respect to the device, although various other features can be used as well as discussed and suggested elsewhere herein. In some embodiments, a single camera can be used to capture image information including the user's fingertip, where the relative location can be determined in two dimensions from the position of the fingertip in the image and the distance determined by the relative size of the fingertip in the image. In other embodiments, a distance detector or other such sensor can be used to provide the distance information. The illustrated computing device **302** in this example instead includes at least two different cameras **308** and **310** positioned on the device with a sufficient separation such that the device can utilize stereoscopic imaging (or another such approach) to determine a relative position of one or more features with respect to the device in three dimensions. Although two cameras are illustrated near a top and bottom of the device in this example, it should be understood that there can be additional or alternative imaging elements of the same or a different type at various other locations on the device within the scope of the various embodiments. In this example, the upper camera **308** is able to see the fingertip **304** of the user as long as that feature is within a field of view **312** of the upper camera **308** and there are no obstructions between the upper camera and those features. If software executing on the computing device (or otherwise in communication with the computing device) is able to determine information such as the angular field of view of the camera, the zoom level at which the information is currently being captured, and any other such relevant information, the software can determine an approximate direction **316** of the fingertip with respect to the upper camera. In some embodiments, methods such as ultrasonic detection, feature size analysis, luminance analysis through active illumination, or other such distance measurement approaches can be used to assist with position determination as well.

In this example, a second camera **310** is used to assist with location determination as well as to enable distance determinations through stereoscopic imaging. The lower camera **310** is also able to image the fingertip **304** as long as the feature is at least partially within the field of view **314** of the lower camera **310**. Using a similar process to that described above, appropriate software can analyze the image information captured by the lower camera to determine an approximate direction **318** to the user's fingertip. The direction can be determined, in at least some embodiments, by looking at a distance from a center (or other) point of the image and comparing that to the angular measure of the field of view of the camera. For example, a feature in the middle of a captured image is likely directly in front of the respective camera. If the feature is at the very edge of the image, then the feature is likely at a forty-five degree angle from a vector orthogonal to the image plane of the capture element. Positions between the edge and the center correspond to intermediate angles as would be apparent to one of ordinary skill in the art, and as known in the art for stereoscopic imaging. Once the direction vectors from at least two image capture elements are determined for a given feature, the intersection point of those vectors can be determined, which corresponds to the approximate relative position in three dimensions of the respective feature.

In some embodiments, information from a single camera can be used to determine the relative distance to a feature of a user. For example, a device can determine the size of a feature (*e.g*., a finger, hand, pen, or stylus) used to provide input to the device. By monitoring the relative size in the captured image information, the device can estimate the relative distance to the feature. This estimated distance can be used to assist with location determination using a single camera or sensor approach.

Further illustrating such an example approach, **FIGS. 3(b)** and **3(c)** illustrate example images **320** and **340** that could be captured of the fingertip using the cameras **308** and **310** of **FIG. 3(a)****.** In this example, **FIG. 3(b)** illustrates an example image **320** that could be captured using the upper camera **308** in **FIG. 3(a)****.** One or more image analysis algorithms can be used to analyze the image to perform pattern recognition, shape recognition, or another such process to identify a feature of interest, such as the user's fingertip, thumb, hand, or other such feature. Approaches to identifying a feature in an image, such may include feature detection, facial feature extraction, feature recognition, stereo vision sensing, character recognition, attribute estimation, or radial basis function (RBF) analysis approaches, are well known in the art and will not be discussed herein in detail. Upon identifying the feature, here the user's hand **322**, at least one point of interest **324**, here the tip of the user's index finger, is determined. As discussed above, the software can use the location of this point with information about the camera to determine a relative direction to the fingertip. A similar approach can be used with the image **340** captured by the lower camera **310** as illustrated in **FIG. 3(c)**, where the hand **342** is located and a direction to the corresponding point **344** determined. As illustrated in **FIGS. 3(b)** and **3(c)**, there can be offsets in the relative positions of the features due at least in part to the separation of the cameras. Further, there can be offsets due to the physical locations in three dimensions of the features of interest. By looking for the intersection of the direction vectors to determine the position of the fingertip in three dimensions, a corresponding input can be determined within a determined level of accuracy. If higher accuracy is needed, higher resolution and/or additional elements can be used in various embodiments. Further, any other stereoscopic or similar approach for determining relative positions in three dimensions can be used as well within the scope of the various embodiments.

As can be seen in **FIG. 3(a)**, however, there can be a region near the surface of the screen that falls outside the fields of view of the cameras on the device, which creates a "dead zone" where the location of a fingertip or other feature cannot be determined (at least accurately or quickly) using images captured by the cameras of the device.

**FIG. 3(d)** illustrates another perspective **360** of the device **302**. If a fingertip or other feature near the display screen **306** of the device falls within at least one of these fields of view, the device can analyze images or video captured by these cameras to determine the location of the fingertip. In order to account for position in the dead zone outside the fields of view near the display, the device can utilize a second detection approach, such as by using one or more capacitive sensors. The capacitive sensor(s) can detect position at or near the surface of the display screen, and by adjusting the parameters of the capacitive sensor(s) the device can have a detection range **370** that covers the dead zone and also at least partially overlaps the fields of view. Such an approach enables the location of a fingertip or feature to be detected when that fingertip is within a given distance of the display screen, whether or not the fingertip can be seen by one of the cameras. Other location detection approaches can be used as well, such as ultrasonic detection, distance detection, optical analysis, and the like.

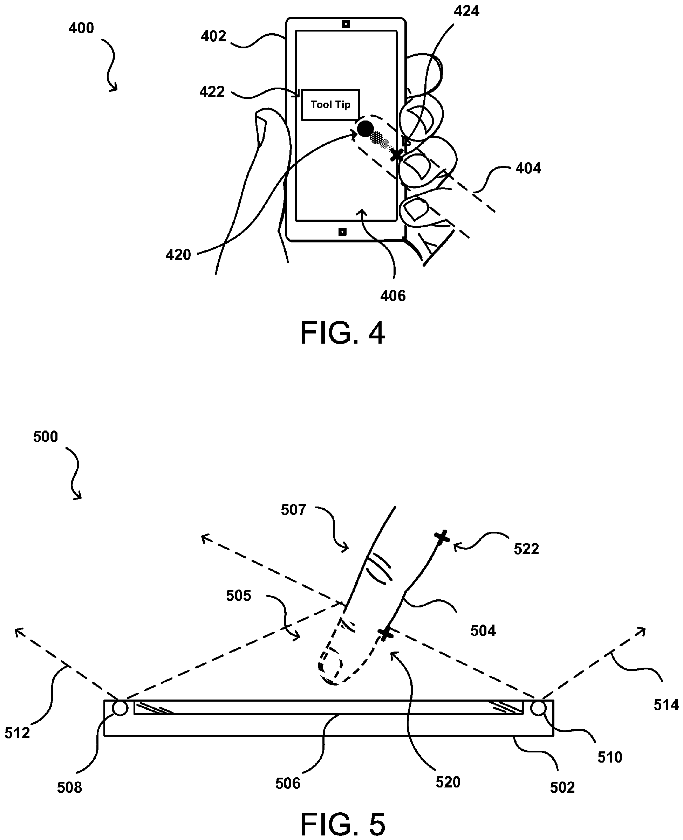

**FIG. 4** illustrates an example approach **400** for determining whether data to be displayed at a location may be occluded that can be utilized in accordance with various embodiments. This situation is similar to that of the one depicted in **FIG. 1**. That is, in **FIG. 4**, a user's finger **404** hovers over a user interface element at a location **420** displayed on a touchscreen **406** of computing device **402**. The computing device **402** includes one or more capacitive sensors incorporated into the touchscreen **406** that have been configured to detect hover inputs by the user, such as one or more self-capacitive sensors (not shown). In other embodiments, the capacitive sensor(s) may be separate from a display of the computing device. In still other embodiments, a computing device may include a combination of self-capacitive sensors and mutual capacitive sensors to, for example, enable multi-touch and single hover detection.

In this example, the angle of incidence between the user's finger **404** and the computing device is such that capacitive disturbance can be measured from a first point **420** on the touchscreen **406** corresponding to the user's fingertip to a second point **424** at the edge of the touchscreen. For instance, the capacitive sensor(s) can be configured to detect both the user's fingertip corresponding to the point at **420** and the presence of other portions of the user's finger **404** below the fingertip when the angle of incidence between the user's finger **404** and the computing device **402** is at least 45°. In various embodiments, other minimum and/or maximum threshold angles of incidence can be used based at least in part on the characteristics of the capacitive sensor(s). The capacitive disturbance that has been detected here is represented as the gradient from point **420** to point **424**. From the detected capacitive disturbance, the footprint of the user's finger **404** (i.e., the area indicated by the dashed line corresponding to the user's finger **404** on the touchscreen **406** and the right edge of the touchscreen **406**) can be estimated. Data associated with a GUI element that is located at point **420** and associated with a hover interaction can then be displayed away from the footprint of the user's finger **404**, for example. Here, that data comprises a tooltip **422**.

In certain cases, it may not be possible to measure capacitive disturbance to determine the footprint of the user's finger, such as when the user's finger is perpendicular to the touchscreen. Another approach in accordance with various embodiments, such as the example **500** illustrated in **FIG. 5**, can be used for determining whether data to be displayed at a particular location may be occluded. In this example, the user's finger **504** can be seen hovering over or within a determined distance of a display screen **506** of computing device **502**. The computing device **502** further includes cameras **508** and **510**, each having fields of view **512** and **514**, respectively. Here, a portion of the user's finger **505** (as depicted by the dashed lines) falls into the dead zone between the fields of view **512** and **514**, and this portion cannot be captured by the cameras **508** and **510**. However, a second portion **507** of the user's finger **504** can be captured by the cameras. In various embodiments, historical image data including the entirety of the user's finger (or the user's hand) can be used to estimate or extrapolate the missing portion **505**. For example, the historical image data can be registered with respect to contemporaneous image data corresponding to portion **507** to generate a composite image that can be used to estimate the position of the user's fingertip, finger, and hand using photogrammetric techniques. In particular, the cameras **508** and **510** can each be calibrated to update a camera model that correlates the image data coordinates and world coordinates. In this manner, the pose, i.e., position and orientation, of the user's fingertip can be estimated with respect to the computing device to detect a hover input **506** even when the user's fingertip falls within the dead zone between the cameras **508** and **510**. Such an approach can also be used to estimate the footprint of the user's finger **504** (and hand) when the capacitive sensors cannot detect the user's finger **504** in order to determine an appropriate location to display a tooltip, hover box, or other such information. In other embodiments, a Tracking-Learning-Detection (TLD) algorithm (also known as "Predator") can be used, such as set forth in Kalal, Zdenek et al. "Online learning of robust object detectors during unstable tracking." In Computer Vision Workshops (ICCV Workshops), 2009 IEEE 12th International Conference on, pp. 1417-1424. IEEE, 2009. TLD tracks a selected object using an adaptive tracker that models the selected object iteratively by "growing events" and "pruning events" and an on-line detector. These events are designed to compensate for the errors of the other, effectively canceling each other. Growing events comprise a selection of samples of the tracker's trajectory and model update. Pruning events is based on the assumption that the selected object is unique within a scene, and when the detector and tracker agree on the object position, all other remaining detections are removed from the model. The detector runs concurrently with the tracker and enables re-initialization of the tracker when previously observed image data of the object reappears in the event the object becomes partially or totally occluded or disappears altogether from a scene.

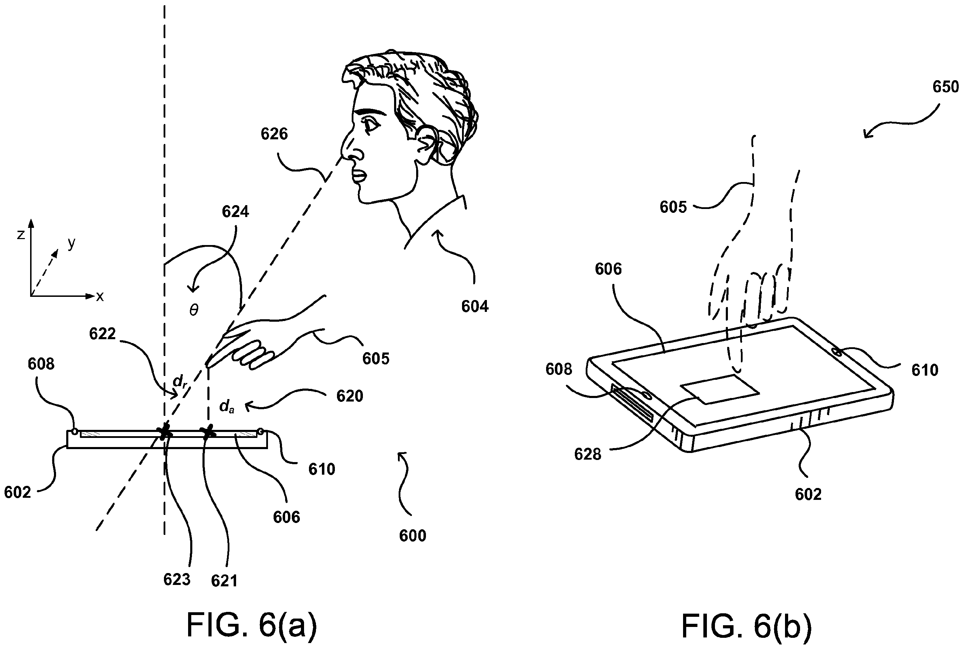

**FIGS. 6(a)** and **6(b)** illustrate another example approach for determining whether data to be displayed at a location may be occluded that can be utilized in accordance with various embodiments. In some embodiments, detection of a location on a screen that the user is hovering over may be determined by an absolute distance between the user's finger (or other such implement) from the screen. In other embodiments, detection of the location that the user is hovering over can be a relative distance based on the location of the user's finger and the angle of incidence between the user's line of sight with respect to the screen. For example, **FIG. 6(a)** illustrates a situation **600** of a user **604** sitting a table or a desk with a computing device **602** lying flat on the table. Determining where the user is pointing may be an estimation of the absolute distance **620** *dₐ* between the user's fingertip and the computing device **602** in certain embodiments. For example, the computing device may determine that the user is hovering over a point **621** of the display element **606** when the distance between the user's fingertip and the point is within a minimum and/or maximum threshold distance, or threshold range of distances. The distance between the user's fingertip and the point **621** can be measured, for example, by calculating the length of a line, normal or perpendicular to the *x-y* plane of the computing device, between the user's fingertip and the point **621**. In other embodiments, determining where the user is pointing may depend on a relative distance **622** *dᵣ* between the user's fingertip and the computing device **602** with respect to the user's line of sight. For instance, the computing device may determine that the user is hovering over a point **623** of the display element **606** when the user's fingertip and the point is within a threshold range of distances. The distance between the user's fingertip and the point **623** can be measured, for example, by calculating the length of a line, corresponding to the angle of incidence **624** between the user's line of sight and the computing device, between the user's fingertip and the point **623**. Further, various embodiments also consider that the user's line of sight can affect where data associated with a hover interaction can be displayed to avoid occluding at least substantive portions of the data. For example, a user may not be facing flush to a computing device, such as can be seen in the situation **600** in **FIG. 6(a)**. Moreover, the user may be hovering over a user interface element displayed on the computing device such that the user's finger is perpendicular to the computing device, as can be seen in the situation **650** in **FIG. 6(b)****.** Under these circumstances where the user interface element is associated with information for display when a hover input is received or detected, placement of the information at a preferred position, such as above the user's fingertip as discussed elsewhere herein, may obstruct at least a portion of the information. Approaches in accordance with various embodiments can address these issues by obtaining additional information regarding the characteristics of the user with respect to the computing device. **FIG. 6(a)** illustrates an example of one such approach wherein an angle of incidence **624** between the user's line of sight **626** and the computing device **602** can be estimated from image data captured by cameras **608** and **610** using stereoscopic image analysis, as discussed elsewhere herein. Here, the angle of incidence is determined to be approximately 30°. **FIG. 6(b)** shows that the user's hand **605** is nearly perpendicular to the computing device **602** such that a top portion (with respect to the use) of the display element **606** is obscured from the user's view. Accordingly, a determination that data **628** corresponding to a user interface element associated with a hover interaction can be displayed below the user's fingertip to avoid at least a portion of the data being hidden or obscured to the user.

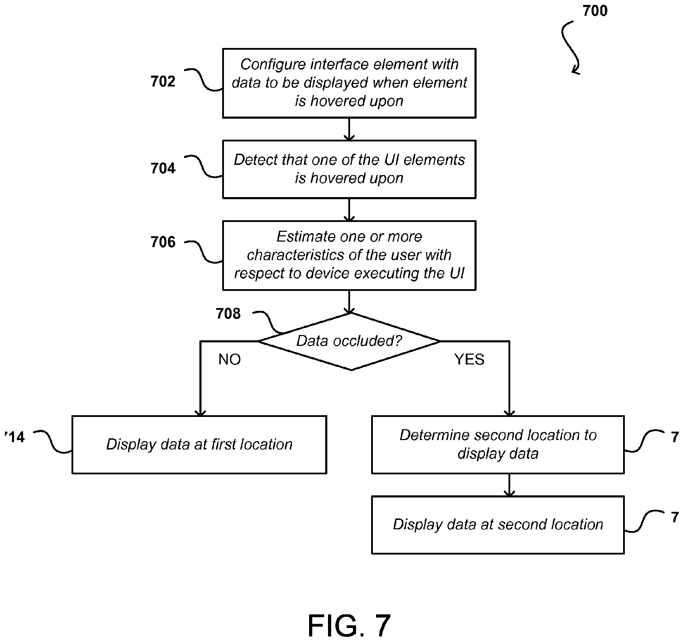

**FIG. 7** illustrates an example process **700** for non-occluded display of data associated with a hover interaction that can be utilized in accordance with various embodiments. It should be understood, however, that there can be additional, fewer, or alternative steps performed in similar or alternative orders, or in parallel, within the scope of the various embodiments unless otherwise stated. In this example, one or more elements of a user interface are defined such that respective data will be displayed in the user interface when a pointer (e.g., cursor, user finger, user hand, stylus, digital pen, etc.) hovers upon one of the elements **702**. For instance, if the user interface includes a virtual keyboard, the elements may comprise each of the keys of the keyboard and the data to be displayed for each key upon hover may include the alphanumeric value of the key; a size for the key, such as a larger size; a shape bounding the key, such as a circle or a box; a color for the shape bounding the key; etc. As another example, the user interface may be associated with an application program and some of the elements of such a user interface may comprise a plurality of tool icons in a toolbar. Each of the plurality of tool icons may be designated with data for display upon hover such as the name of the tool corresponding to the tool icon and a description of what computing tasks are performed upon selection (e.g., click, touch, contact of the stylus, etc.). As yet another example, the user interface may correspond to an operating system executing on a computing device. User interface elements may include widgets or utilities such as a clock icon or calendar icon that can be expanded upon hover to provide the time or the date, respectively. Various other behaviors can be associated with user interface elements that are defined as hoverable as discussed elsewhere herein and as known to those of ordinary skill.

A user may interact with the user interface such that a computing device executing the user interface detects that one of the user interface elements has been hovered upon **704**. As discussed elsewhere herein, a computing device may include one or more capacitive sensors, one or more cameras, one or more ultrasonic detectors, and/or one or more other such sensors to detect hover inputs. In various embodiments, the computing device can estimate one or more characteristics of the user with respect to the computing device **706**, such as a footprint of the user's hand, the user's handedness, the user's line of sight, etc. Based on this analysis, the computing device may determine whether the data to be displayed would be occluded **708** if displayed at a default position. For instance, there may be a number of heuristics on where to display tooltips, hover boxes, and the like. As discussed elsewhere herein, one approach may be to provide hover boxes corresponding to virtual keys above the user's fingertip. However, in some circumstances, such placement may result in substantive portions of the data being obscured by the user. If the data would be occluded, the computing device may determine a different location in the user interface to present the data such that at least the substantive portion of the data would be visible to the user **710**, and display the data the determined location **712**. If the data would not be occluded at the preferred or default location, then the data can be displayed at that location **714**.

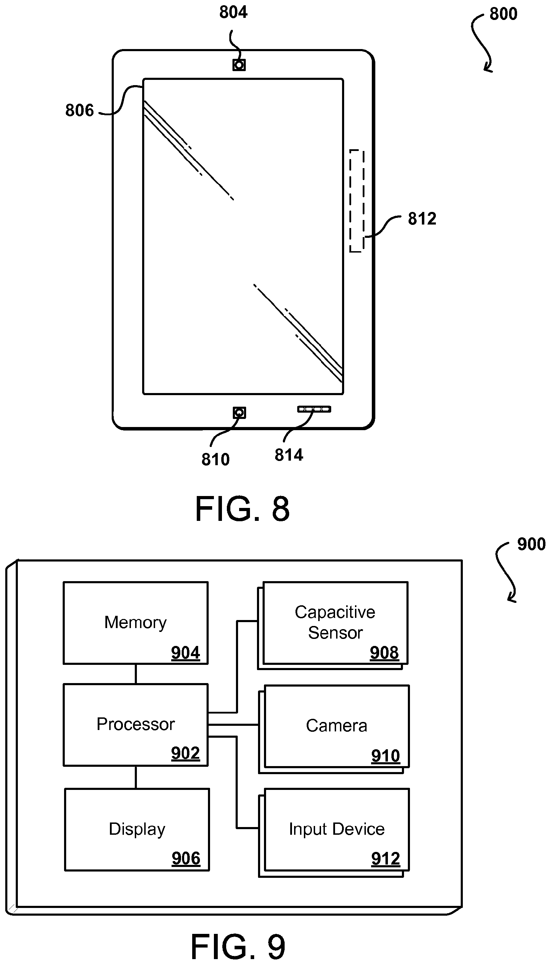

**FIG. 8** illustrates an example electronic user device **800** that can be used in accordance with various embodiments. Although a portable computing device (*e.g*., an electronic book reader or tablet computer) is shown, it should be understood that any electronic device capable of receiving, determining, and/or processing input can be used in accordance with various embodiments discussed herein, where the devices can include, for example, desktop computers, notebook computers, personal data assistants, smart phones, video gaming consoles, television set top boxes, and portable media players. In this example, the computing device **800** has a display screen **806** on the front side, which under normal operation will display information to a user facing the display screen (*e.g*., on the same side of the computing device as the display screen). The display screen can be a touch sensitive screen that utilizes a capacitive touch-based detection approach, for example, that enables the device to determine the location of an object within a distance of the display screen. The device also includes at least one communication component **812** operable to enable the device to communicate, via a wired and/or wireless connection, with another device, either directly or across at least one network, such as a cellular network, the Internet, a local area network (LAN), and the like. Some devices can include multiple discrete components for communicating over various communication channels.

The computing device in this example includes cameras **804** and **806** or other imaging element for capturing still or video image information over at least a field of view of the cameras. In some embodiments, the computing device might only contain one imaging element, and in other embodiments the computing device might contain several imaging elements. Each image capture element may be, for example, a camera, a charge-coupled device (CCD), a motion detection sensor, or an infrared sensor, among many other possibilities. If there are multiple image capture elements on the computing device, the image capture elements may be of different types. In some embodiments, at least one camera can include at least one wide-angle optical element, such as a fish eye lens, that enables the camera to capture images over a wide range of angles, such as 180 degrees or more. Further, each camera can comprise a digital still camera, configured to capture subsequent frames in rapid succession, or a video camera able to capture streaming video.

The example computing device **800** also includes at least one microphone **810** or other audio capture device capable of capturing audio data, such as words or commands spoken by a user of the device. In this example, a microphone is placed on the same side of the device as the display screen **806**, such that the microphone will typically be better able to capture words spoken by a user of the device. In at least some embodiments, a microphone can be a directional microphone that captures sound information from substantially directly in front of the microphone, and picks up only a limited amount of sound from other directions. It should be understood that a microphone might be located on any appropriate surface of any region, face, or edge of the device in different embodiments, and that multiple microphones can be used for audio recording and filtering purposes, etc.

**FIG. 9** illustrates a logical arrangement of a set of general components of an example computing device **900** such as the device **800** described with respect to **FIG. 8****.** In this example, the device includes a processor **902** for executing instructions that can be stored in a memory device or element **904**. As would be apparent to one of ordinary skill in the art, the device can include many types of memory, data storage, or non-transitory computer-readable storage media, such as a first data storage for program instructions for execution by the processor **902**, a separate storage for images or data, a removable memory for sharing information with other devices, etc. The device typically will include some type of display element **906**, such as a touchscreen, electronic ink (e-ink), organic light emitting diode (OLED), liquid crystal display (LCD), etc., although devices such as portable media players might convey information via other means, such as through audio speakers. In at least some embodiments, the display screen provides for touch or swipe-based input using, for example, capacitive or resistive touch technology. As discussed, the device in many embodiments will include one or more cameras or image sensors **910** for capturing image or video content. A camera can include, or be based at least in part upon any appropriate technology, such as a CCD or CMOS image sensor having a sufficient resolution, focal range, viewable area, to capture an image of the user when the user is operating the device. An image sensor can include a camera or infrared sensor that is able to image projected images or other objects in the vicinity of the device. Methods for capturing images or video using a camera with a computing device are well known in the art and will not be discussed herein in detail. It should be understood that image capture can be performed using a single image, multiple images, periodic imaging, continuous image capturing, image streaming, etc. Further, a device can include the ability to start and/or stop image capture, such as when receiving a command from a user, application, or other device. The example device can similarly include at least one audio component, such as a mono or stereo microphone or microphone array, operable to capture audio information from at least one primary direction. A microphone can be a uni-or omni-directional microphone as known for such devices.

The computing device **900** includes at least one capacitive component **908** or other proximity sensor, which can be part of, or separate from, the display assembly. In at least some embodiments the proximity sensor can take the form of a capacitive touch sensor capable of detecting the proximity of a finger or other such object as discussed herein. The computing device can include one or more communication elements or networking sub-systems, such as a Wi-Fi, Bluetooth, RF, wired, or wireless communication system. The device in many embodiments can communicate with a network, such as the Internet, and may be able to communicate with other such devices. In some embodiments the device can include at least one additional input device **912** able to receive conventional input from a user. This conventional input can include, for example, a push button, touch pad, touchscreen, wheel, joystick, keyboard, mouse, keypad, or any other such device or element whereby a user can input a command to the device. In some embodiments, however, such a device might not include any buttons at all, and might be controlled only through a combination of visual and audio commands, such that a user can control the device without having to be in contact with the device.

The device **900** also can include one or more orientation and/or motion sensors. Such sensor(s) can include an accelerometer or gyroscope operable to detect an orientation and/or change in orientation, or an electronic or digital compass, which can indicate a direction in which the device is determined to be facing. The mechanism(s) also (or alternatively) can include or comprise a global positioning system (GPS) or similar positioning element operable to determine relative coordinates for a position of the computing device, as well as information about relatively large movements of the device. The device can include other elements as well, such as may enable location determinations through triangulation or another such approach. These mechanisms can communicate with the processor **902**, whereby the device can perform any of a number of actions described or suggested herein.

In some embodiments, the device **900** can include the ability to activate and/or deactivate detection and/or command modes, such as when receiving a command from a user or an application, or retrying to determine an audio input or video input, etc. For example, a device might not attempt to detect or communicate with devices when there is not a user in the room. If a proximity sensor of the device, such as an IR sensor, detects a user entering the room, for instance, the device can activate a detection or control mode such that the device can be ready when needed by the user, but conserve power and resources when a user is not nearby.

In some embodiments, the computing device **900** may include a light-detecting element that is able to determine whether the device is exposed to ambient light or is in relative or complete darkness. Such an element can be beneficial in a number of ways. For example, the light-detecting element can be used to determine when a user is holding the device up to the user's face (causing the light-detecting element to be substantially shielded from the ambient light), which can trigger an action such as the display element to temporarily shut off (since the user cannot see the display element while holding the device to the user's ear). The light-detecting element could be used in conjunction with information from other elements to adjust the functionality of the device. For example, if the device is unable to detect a user's view location and a user is not holding the device but the device is exposed to ambient light, the device might determine that it has likely been set down by the user and might tum off the display element and disable certain functionality. If the device is unable to detect a user's view location, a user is not holding the device and the device is further not exposed to ambient light, the device might determine that the device has been placed in a bag or other compartment that is likely inaccessible to the user and thus might tum off or disable additional features that might otherwise have been available. In some embodiments, a user must either be looking at the device, holding the device or have the device out in the light in order to activate certain functionality of the device. In other embodiments, the device may include a display element that can operate in different modes, such as reflective (for bright situations) and emissive (for dark situations). Based on the detected light, the device may change modes.

In some embodiments, the device **900** can disable features for reasons substantially unrelated to power savings. For example, the device can use voice recognition to determine people near the device, such as children, and can disable or enable features, such as Internet access or parental controls, based thereon. Further, the device can analyze recorded noise to attempt to determine an environment, such as whether the device is in a car or on a plane, and that determination can help to decide which features to enable/disable or which actions are taken based upon other inputs. If voice recognition is used, words can be used as input, either directly spoken to the device or indirectly as picked up through conversation. For example, if the device determines that it is in a car, facing the user and detects a word such as "hungry" or "eat," then the device might tum on the display element and display information for nearby restaurants, etc. A user can have the option of turning off voice recording and conversation monitoring for privacy and other such purposes.

In some of the above examples, the actions taken by the device relate to deactivating certain functionality for purposes of reducing power consumption. It should be understood, however, that actions can correspond to other functions that can adjust similar and other potential issues with use of the device. For example, certain functions, such as requesting Web page content, searching for content on a hard drive and opening various applications, can take a certain amount of time to complete. For devices with limited resources, or that have heavy usage, a number of such operations occurring at the same time can cause the device to slow down or even lock up, which can lead to inefficiencies, degrade the user experience and potentially use more power. In order to address at least some of these and other such issues, approaches in accordance with various embodiments can also utilize information such as user gaze direction to activate resources that are likely to be used in order to spread out the need for processing capacity, memory space and other such resources.

In some embodiments, the device can have sufficient processing capability, and the camera and associated image analysis algorithm(s) may be sensitive enough to distinguish between the motion of the device, motion of a user's head, motion of the user's eyes and other such motions, based on the captured images alone. In other embodiments, such as where it may be desirable for an image process to utilize a fairly simple camera and image analysis approach, it can be desirable to include at least one orientation determining element that is able to determine a current orientation of the device. In one example, the one or more orientation and/or motion sensors may comprise a single- or multi-axis accelerometer that is able to detect factors such as three-dimensional position of the device and the magnitude and direction of movement of the device, as well as vibration, shock, etc. Methods for using elements such as accelerometers to determine orientation or movement of a device are also known in the art and will not be discussed herein in detail. Other elements for detecting orientation and/or movement can be used as well within the scope of various embodiments for use as the orientation determining element. When the input from an accelerometer or similar element is used along with the input from the camera, the relative movement can be more accurately interpreted, allowing for a more precise input and/or a less complex image analysis algorithm.

When using a camera of the computing device to detect motion of the device and/or user, for example, the computing device can use the background in the images to determine movement. For example, if a user holds the device at a fixed orientation (e.g. distance, angle, etc.) to the user and the user changes orientation to the surrounding environment, analyzing an image of the user alone will not result in detecting a change in an orientation of the device. Rather, in some embodiments, the computing device can still detect movement of the device by recognizing the changes in the background imagery behind the user. So, for example, if an object (e.g. a window, picture, tree, bush, building, car, etc.) moves to the left or right in the image, the device can determine that the device has changed orientation, even though the orientation of the device with respect to the user has not changed. In other embodiments, the device may detect that the user has moved with respect to the device and adjust accordingly. For example, if the user tilts their head to the left or right with respect to the device, the content rendered on the display element may likewise tilt to keep the content in orientation with the user.

The various embodiments can be further implemented in a wide variety of operating environments, which in some cases can include one or more user computers or computing devices which can be used to operate any of a number of applications. User or client devices can include any of a number of general purpose personal computers, such as desktop or laptop computers running a standard operating system, as well as cellular, wireless and handheld devices running mobile software and capable of supporting a number of networking and messaging protocols. Such a system can also include a number of workstations running any of a variety of commercially-available operating systems and other known applications for purposes such as development and database management. These devices can also include other electronic devices, such as dummy terminals, thin-clients, gaming systems and other devices capable of communicating via a network.

The operating environments can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network (SAN) familiar to those skilled in the art. Similarly, any necessary files for performing the functions attributed to the computers, servers or other network devices may be stored locally and/or remotely, as appropriate. Where a system includes computerized devices, each such device can include hardware elements that may be electrically coupled via a bus, the elements including, for example, at least one central processing unit (CPU), at least one input device (*e.g*., a mouse, keyboard, controller, touch-sensitive display element or keypad) and at least one output device (*e.g*., a display device, printer or speaker). Such a system may also include one or more storage devices, such as disk drives, optical storage devices and solid-state storage devices such as random access memory (RAM) or read-only memory (ROM), as well as removable media devices, memory cards, flash cards, etc.

Such devices can also include a computer-readable storage media reader, a communications device (*e.g*., a modem, a network card (wireless or wired), an infrared communication device) and working memory as described above. The computer-readable storage media reader can be connected with, or configured to receive, a computer-readable storage medium representing remote, local, fixed and/or removable storage devices as well as storage media for temporarily and/or more permanently containing, storing, transmitting and retrieving computer-readable information. The system and various devices also typically will include a number of software applications, modules, services or other elements located within at least one working memory device, including an operating system and application programs such as a client application or Web browser. It should be appreciated that alternate embodiments may have numerous variations from that described above. For example, customized hardware might also be used and/or particular elements might be implemented in hardware, software (including portable software, such as applets) or both. Further, connection to other computing devices such as network input/output devices may be employed.

Storage media and computer readable media for containing code, or portions of code, can include any appropriate media known or used in the art, including storage media and communication media, such as but not limited to volatile and non-volatile, removable and non-removable media implemented in any method or technology for storage and/or transmission of information such as computer readable instructions, data structures, program modules or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices or any other medium which can be used to store the desired information and which can be accessed by a system device. Based on the disclosure and teachings provided herein, a person of ordinary skill in the art will appreciate other ways and/or methods to implement the various embodiments.

The specification and drawings are, accordingly, to be regarded in an illustrative rather than a restrictive sense. It will, however, be evident that various modifications and changes may be made thereunto without departing from the scope of the invention as set forth in the claims.

## Claims

1. A computer-implemented method for displaying information, comprising, under control of one or more computer systems configured with executable instructions:
detecting, using one or more sensors located on a same side of a computing device as a screen of the computing device, that at least a portion of a physical object is within a determined distance from an interface element displayed on the screen, the interface element configured to display data on the screen upon detection that the object is within the determined distance from the interface element;
determining a first region of the screen for displaying an indication of input received to the computing device;
determining, using the one or more sensors a second region of the screen that is occluded, with respect to a line of sight of a user directed toward the screen, by the object; and
displaying at least a portion of the data outside the first region and the second region of the screen.

2. The computer-implemented method of claim 1, wherein the determined distance is based at least in part upon a line between the object and the interface element, the object is located above a plane of the interface element, and the line is normal to the plane of the interface element.

3. The computer-implemented method of claim 1, wherein said detecting includes:
determining an angle of incidence between a line of sight of the user and the screen displaying the interface element;
wherein the determined distance is based at least in part upon a line between the object and the interface element, the object is above a plane of the interface element, and the line corresponds to the angle of incidence.

4. The computer-implemented method of claim 1, further comprising:
detecting capacitive disturbance corresponding to the object over the screen,
wherein the second region is based at least in part upon a location of the capacitive disturbance corresponding to the object over the screen.

5. The computer-implemented method of claim 1, further comprising:
capturing one or more images corresponding to the object; and
determining at least one of a position or an orientation of the object over the screen by analyzing the one or more images,
wherein the second region is based at least in part upon the at least one of the position or the orientation of the object over the screen.

6. The computer-implemented method of claim 1, further comprising:
capturing one or more images corresponding to the user; and
determining an angle of incidence between a line of sight of the user and the screen by analyzing the one or more images corresponding to the user,
wherein the second region is based at least in part upon the angle of incidence.

7. The computer-implemented method of claim 1, further comprising:
storing first image data corresponding to the object;
capturing second image data missing at least a portion of the object; and
registering the first image data with respect to the second image data to generate one or more composite images,
wherein the second region is based at least in part upon the one or more composite images.

8. The computer-implemented method of claim 1, further comprising:
calibrating one or more cameras;
generating a camera model based at least in part upon the one or more cameras;
capturing one or more images corresponding to the object; and
determining an updated camera model based at least in part upon the one or more images corresponding to the object to correlate coordinates of the one or more cameras and world coordinates,
wherein the second region is based at least in part upon analyzing the updated camera model.

9. The computer-implemented method of claim 1, wherein the interface element comprises a key of a virtual keyboard.

10. The computer-implemented method of claim 1, further comprising:
detecting using the sensor, that at least a portion of a second object is within a determined distance from a second interface element displayed on the screen, the second interface element configured to display second data on the screen upon detection that the object is within the determined distance from the second interface element;
estimating a third region of the screen that is occluded, with respect to a line of sight of a user directed toward the screen, by the third object; and
displaying at least a portion of the second data outside the first region, the second region and the third region of the screen.

11. A computing device, comprising:
one or more processors;
a screen;
a sensor located on a same side of a computing device as the screen;
a memory device including instructions that, when executed by the one or more processors, cause the computing device to:
detect, using the sensor, that at least a portion of a physical object is within a determined distance from an interface element displayed on the screen, the interface element configured to display data on the screen upon detection that the object is within the determined distance from the interface element;
determine a first region of the screen for displaying an indication of input received to the computing device;
determine using the sensor a second region of the screen that is occluded, with respect to a line of sight of a user directed toward the screen, by the object; and
display at least a portion of the data outside the first region and the second region of the screen.

12. The computing device of claim 11, wherein the sensor comprises a capacitive sensor and the instructions when executed further cause the computing device to:
detect, using the capacitive sensor, capacitive disturbance corresponding to the object over the screen,
wherein the second region is based at least in part upon a location of the capacitive disturbance corresponding to the object over the screen.

13. The computing device of claim 11, wherein the sensor comprises a camera and the instructions when executed further cause the computing device to:
capture, using the camera, one or more images corresponding to the object; and
determine at least one of a position or an orientation of the object over the screen by analyzing the one or more images,
wherein the second region is based at least in part upon the at least one of the position or the orientation of the object over the screen.

14. The computing device of claim 11, wherein the sensor comprises a camera and the instructions when executed further cause the computing device to:
capture, using the camera, one or more images corresponding to the user; and
determine an angle of incidence between a line of sight of the user and the screen by analyzing the one or more images corresponding to the user,
wherein the second region is based at least in part upon the angle of incidence.

15. The computing device of claim 11, wherein the interface element comprises a key of a virtual keyboard.

## Patentansprüche

1. Computerimplementiertes Verfahren zum Anzeigen von Informationen, das unter Steuerung durch ein oder mehrere Computersysteme, die mit ausführbaren Anweisungen ausgelegt sind, Folgendes umfasst:
Detektieren unter Verwendung eines oder mehrerer Sensoren, die sich auf einer selben Seite einer Datenverarbeitungsvorrichtung befinden wie ein Bildschirm der Datenverarbeitungsvorrichtung, dass mindestens ein Abschnitt eines physischen Objekts sich innerhalb eines bestimmten Abstandes von einem Schnittstellenelement befindet, das auf dem Bildschirm angezeigt wird, wobei das Schnittstellenelement dazu ausgelegt ist, nach Detektieren, dass sich das Objekt innerhalb des bestimmten Abstandes vom Schnittstellenelement befindet, Daten auf dem Bildschirm anzuzeigen;
Bestimmen eines ersten Bereichs des Bildschirms zum Anzeigen einer Anzeige einer Eingabe, die von der Datenverarbeitungsvorrichtung empfangen wurde;
Bestimmen unter Verwendung des einen oder der mehreren Sensoren eines zweiten Bereichs des Bildschirms, der mit Bezug auf eine Sichtlinie eines zum Bildschirm gewendeten Benutzers durch das Objekt verdeckt wird; und
Anzeigen mindestens eines Abschnitts der Daten außerhalb des ersten Bereichs und des zweiten Bereichs des Bildschirms.

2. Computerimplementiertes Verfahren nach Anspruch 1, wobei der bestimmte Abstand mindestens teilweise auf einer Linie zwischen dem Objekt und dem Schnittstellenelement basiert, wobei sich das Objekt über einer Ebene des Schnittstellenelements befindet und die Linie senkrecht zur Ebene des Schnittstellenelements steht.

3. Computerimplementiertes Verfahren nach Anspruch 1, wobei das Detektieren Folgendes beinhaltet:
Bestimmen eines Einfallswinkels zwischen einer Sichtlinie des Benutzers und dem Bildschirm, auf dem das Schnittstellenelement angezeigt wird;
wobei der bestimmte Abstand mindestens teilweise auf einer Linie zwischen dem Objekt und dem Schnittstellenelement basiert, wobei sich das Objekt über einer Ebene des Schnittstellenelements befindet und die Linie dem Einfallswinkel entspricht.

4. Computerimplementiertes Verfahren nach Anspruch 1, das ferner Folgendes umfasst:
Detektieren einer kapazitiven Störung, die dem Objekt über dem Bildschirm entspricht,
wobei der zweite Bereich mindestens teilweise auf einer Lage der kapazitiven Störung basiert, die dem Objekt über dem Bildschirm entspricht.

5. Computerimplementiertes Verfahren nach Anspruch 1, das ferner Folgendes umfasst:
Erfassen eines oder mehrerer Bilder, die dem Objekt entsprechen; und
Bestimmen mindestens einer Position und/oder einer Ausrichtung des Objekts über dem Bildschirm durch Analysieren des einen oder der mehreren Bilder,
wobei der zweite Bereich mindestens teilweise auf mindestens der Position und/oder der Ausrichtung des Objekts über dem Bildschirm basiert.

6. Computerimplementiertes Verfahren nach Anspruch 1, das ferner Folgendes umfasst:
Erfassen eines oder mehrerer Bilder, die dem Benutzer entsprechen; und
Bestimmen eines Einfallswinkels zwischen einer Sichtlinie des Benutzers und dem Bildschirm durch Analysieren des einen oder der mehreren Bilder, die dem Benutzer entsprechen,
wobei der zweite Bereich mindestens teilweise auf dem Einfallswinkel basiert.

7. Computerimplementiertes Verfahren nach Anspruch 1, das ferner Folgendes umfasst:
Speichern erster Bilddaten, die dem Objekt entsprechen;
Erfassen von zweiten Bilddaten, in denen mindestens ein Abschnitt des Objekts fehlt; und
Registrieren der ersten Bilddaten mit Bezug auf die zweiten Bilddaten, um ein oder mehrere zusammengesetzte Bilder zu erzeugen,
wobei der zweite Bereich mindestens teilweise auf dem einen oder den mehreren zusammengesetzten Bildern basiert.

8. Computerimplementiertes Verfahren nach Anspruch 1, das ferner Folgendes umfasst:
Kalibrieren einer oder mehrerer Kameras;
Erzeugen eines Kameramodells, das mindestens teilweise auf der einen oder den mehreren Kameras basiert;
Erfassen eines oder mehrerer Bilder, die dem Objekt entsprechen; und
Bestimmen eines aktualisierten Kameramodells auf Basis mindestens teilweise des einen oder der mehreren Bilder, die dem Objekt entsprechen, um Koordinaten der einen oder der mehreren Kameras und Weltkoordinaten zu korrelieren,
wobei der zweite Bereich mindestens teilweise auf dem Analysieren des aktualisierten Kameramodells basiert.

9. Computerimplementiertes Verfahren nach Anspruch 1, wobei das Schnittstellenelement eine Taste einer virtuellen Tastatur umfasst.

10. Computerimplementiertes Verfahren nach Anspruch 1, das ferner Folgendes umfasst:
Detektieren unter Verwendung des Sensors, dass mindestens ein Abschnitt eines zweiten Objekts sich innerhalb eines bestimmten Abstandes von einem zweiten Schnittstellenelement befindet, das auf dem Bildschirm angezeigt wird, wobei das zweite Schnittstellenelement dazu ausgelegt ist, nach Detektieren, dass sich das Objekt innerhalb des bestimmten Abstandes vom zweiten Schnittstellenelement befindet, zweite Daten auf dem Bildschirm anzuzeigen;
Schätzen eines dritten Bereichs des Bildschirms, der mit Bezug auf eine Sichtlinie eines zum Bildschirm gewendeten Benutzers durch das dritte Objekt verdeckt wird; und
Anzeigen mindestens eines Abschnitts der zweiten Daten außerhalb des ersten Bereichs, des zweiten Bereichs und des dritten Bereichs des Bildschirms.

11. Datenverarbeitungsvorrichtung, die Folgendes umfasst:
einen oder mehrere Prozessoren;
einen Bildschirm;
einen Sensor, der sich auf einer selben Seite einer Datenverarbeitungsvorrichtung befindet wie der Bildschirm;
eine Speichervorrichtung mit Anweisungen, die, wenn sie von dem einen oder den mehreren Prozessoren ausgeführt werden, bewirken, dass die Datenverarbeitungsvorrichtung Folgendes durchführt:
Detektieren unter Verwendung des Sensors, dass mindestens ein Abschnitt eines physischen Objekts sich innerhalb eines bestimmten Abstandes von einem Schnittstellenelement befindet, das auf dem Bildschirm angezeigt wird, wobei das Schnittstellenelement dazu ausgelegt ist, nach Detektieren, dass sich das Objekt innerhalb des bestimmten Abstandes vom Schnittstellenelement befindet, Daten auf dem Bildschirm anzuzeigen;
Bestimmen eines ersten Bereichs des Bildschirms zum Anzeigen einer Anzeige einer Eingabe, die von der Datenverarbeitungsvorrichtung empfangen wurde;
Bestimmen unter Verwendung des Sensors eines zweiten Bereichs des Bildschirms, der mit Bezug auf eine Sichtlinie eines zum Bildschirm gewendeten Benutzers durch das Objekt verdeckt wird; und
Anzeigen mindestens eines Abschnitts der Daten außerhalb des ersten Bereichs und des zweiten Bereichs des Bildschirms.

12. Datenverarbeitungsvorrichtung nach Anspruch 11, wobei der Sensor einen kapazitiven Sensor umfasst und die Anweisungen, wenn sie ausgeführt werden, ferner bewirken, dass die Datenverarbeitungsvorrichtung Folgendes durchführt:
Detektieren unter Verwendung des kapazitiven Sensors einer kapazitiven Störung, die dem Objekt über dem Bildschirm entspricht,
wobei der zweite Bereich mindestens teilweise auf einer Lage der kapazitiven Störung basiert, die dem Objekt über dem Bildschirm entspricht.

13. Datenverarbeitungsvorrichtung nach Anspruch 11, wobei der Sensor eine Kamera umfasst und die Anweisungen, wenn sie ausgeführt werden, ferner bewirken, dass die Datenverarbeitungsvorrichtung Folgendes durchführt:
Erfassen unter Verwendung der Kamera eines oder mehrerer Bilder, die dem Objekt entsprechen; und
Bestimmen mindestens einer Position und/oder einer Ausrichtung des Objekts über dem Bildschirm durch Analysieren des einen oder der mehreren Bilder,
wobei der zweite Bereich mindestens teilweise auf mindestens der Position und/oder der Ausrichtung des Objekts über dem Bildschirm basiert.

14. Datenverarbeitungsvorrichtung nach Anspruch 11, wobei der Sensor eine Kamera umfasst und die Anweisungen, wenn sie ausgeführt werden, ferner bewirken, dass die Datenverarbeitungsvorrichtung Folgendes durchführt:
Erfassen unter Verwendung der Kamera eines oder mehrerer Bilder, die dem Benutzer entsprechen; und
Bestimmen eines Einfallswinkels zwischen einer Sichtlinie des Benutzers und dem Bildschirm durch Analysieren des einen oder der mehreren Bilder, die dem Benutzer entsprechen,
wobei der zweite Bereich mindestens teilweise auf dem Einfallswinkel basiert.

15. Datenverarbeitungsvorrichtung nach Anspruch 11, wobei das Schnittstellenelement eine Taste einer virtuellen Tastatur umfasst.

## Revendications

1. Procédé informatique destiné à afficher des informations, comprenant, sous la commande d'au moins un système informatique conçu avec des instructions exécutables :
la détection, au moyen d'un ou plusieurs capteurs situés sur un même côté d'un dispositif informatique en tant qu'écran du dispositif informatique, qu'au moins une partie d'un objet physique se situe à une distance d'un élément d'interface affiché sur l'écran, l'élément d'interface étant conçu pour afficher des données sur l'écran lorsqu'on a détecté que l'objet se situe à la distance déterminée de l'élément d'interface ;
la détermination d'une première région de l'écran permettant d'afficher sur le dispositif informatique une indication d'entrée reçue ;
la détermination au moyen d'au moins un capteur d'une deuxième région de l'écran qui est obstruée, par rapport à une ligne de visée d'un utilisateur dirigée vers l'écran, par l'objet ; et
l'affichage d'au moins une partie des données à l'extérieur de la première région et de la deuxième région de l'écran.

2. Procédé informatique selon la revendication 1, dans lequel la distance déterminée repose au moins en partie sur une ligne entre l'objet et l'élément d'interface, l'objet est situé au-dessus d'un plan de l'élément d'interface et la ligne est perpendiculaire au plan de l'élément d'interface.

3. Procédé informatique selon la revendication 1, dans lequel ladite détection comprend :
la détermination d'un angle d'incidence entre une ligne de visée de l'utilisateur et l'écran affichant l'élément d'interface ;
la distance déterminée reposant au moins en partie sur une ligne entre l'objet et l'élément d'interface, l'objet étant au-dessus d'un plan de l'élément d'interface et la ligne correspondant à l'angle d'incidence.

4. Procédé informatique selon la revendication 1, comprenant en outre :
la détection de perturbation capacitive correspondant à l'objet au-dessus de l'écran,
la deuxième région reposant au moins en partie sur un emplacement de la perturbation capacitive correspondant à l'objet au-dessus de l'écran.

5. Procédé informatique selon la revendication 1, comprenant en outre :
la capture d'au moins une image correspondant à l'objet ; et
la détermination de la position et/ou de l'orientation de l'objet au-dessus de l'écran en analysant ladite au moins une image,
la deuxième région reposant au moins en partie sur ladite position et/ou ladite orientation de l'objet au-dessus de l'écran.

6. Procédé informatique selon la revendication 1, comprenant en outre :
la capture d'au moins une image correspondant à l'utilisateur ; et
la détermination d'un angle d'incidence entre une ligne de visée de l'utilisateur et l'écran en analysant ladite au moins une image correspondant à l'utilisateur,
la deuxième région reposant au moins en partie sur l'angle d'incidence.

7. Procédé informatique selon la revendication 1, comprenant en outre :
le stockage de premières données d'image correspondant à l'objet ;
la capture de deuxièmes données d'image dans lesquelles il manque au moins une partie de l'objet ; et
l'enregistrement de premières données d'image par rapport aux deuxièmes données d'image pour générer au moins une image composite,
la deuxième région reposant au moins en partie sur l'au moins une image composite.

8. Procédé informatique selon la revendication 1, comprenant en outre :
l'étalonnage d'au moins un appareil photographique ;
la génération d'un modèle d'appareil photographique en fonction au moins en partie de l'au moins un appareil photographique ;
la capture d'au moins une image correspondant à l'objet ; et
la détermination d'un modèle d'appareil photographique actualisé en fonction au moins en partie de l'au moins une image correspondant à l'objet pour corréler des coordonnées de l'au moins un appareil photographique et des coordonnées universelles.
la deuxième région reposant au moins en partie sur l'analyse du modèle d'appareil photographique actualisé.

9. Procédé informatique selon la revendication 1, dans lequel l'élément d'interface comprend une touche d'un clavier virtuel.

10. Procédé informatique selon la revendication 1, comprenant en outre :
la détection au moyen du capteur, qu'au moins une partie d'un deuxième objet se situe à une distance déterminée d'un deuxième élément d'interface affiché sur l'écran, le deuxième élément d'interface étant conçu pour afficher des deuxièmes données sur l'écran lorsqu'on a détecté que l'objet se situe à la distance déterminée du deuxième élément d'interface ;
l'estimation d'une troisième région de l'écran qui est obstruée, par rapport à une ligne de visée d'un utilisateur dirigée vers l'écran, par le troisième objet ; et
l'affichage d'au moins une partie des deuxièmes données à l'extérieur de la première région, de la deuxième région et de la troisième région de l'écran.

11. Dispositif informatique, comprenant :
au moins un processeur ;
un écran ;
un capteur situé sur un même côté d'un dispositif informatique en tant qu'écran ;
un dispositif de mémoire comprenant des instructions qui, lorsqu'elles sont exécutées par l'au moins un processeur, amènent le dispositif informatique à :
détecter, au moyen du capteur, qu'au moins une partie d'un objet physique se situe à une distance déterminée d'un élément d'interface affiché sur l'écran, l'élément d'interface étant conçu pour afficher des données sur l'écran lorsqu'on a détecté que l'objet se situe à une distance déterminée de l'élément d'interface ;
déterminer une première région de l'écran permettant d'afficher sur le dispositif informatique une indication d'entrée reçue ;
déterminer, au moyen du capteur, une deuxième région de l'écran qui est obstruée, par rapport à une ligne de visée d'un utilisateur dirigée vers l'écran, par l'objet ; et
afficher au moins une partie des données à l'extérieur de la première région et de la deuxième région de l'écran.

12. Dispositif informatique selon la revendication 11, dans lequel le capteur comprend un capteur capacitif et les instructions, lorsqu'elles sont exécutées, amènent en outre le dispositif informatique à :
détecter au moyen du capteur capacitif la perturbation capacitive correspondant à l'objet au-dessus de l'écran,
la deuxième région reposant au moins en partie sur un emplacement de la perturbation capacitive correspondant à l'objet au-dessus de l'écran.

13. Dispositif informatique selon la revendication 11, dans lequel le capteur comprend un appareil photographique et les instructions, lorsqu'elles sont exécutées, amènent en outre le dispositif informatique à :
capturer, au moyen de l'appareil photographique, au moins une image correspondant à l'objet ; et
déterminer la position et/ou l'orientation de l'objet au-dessus de l'écran en analysant l'au moins une image,
la deuxième région reposant au moins en partie sur ladite position et/ou ladite orientation de l'objet au-dessus de l'écran.

14. Dispositif informatique selon la revendication 11, dans lequel le capteur comprend un appareil photographique et les instructions, lorsqu'elles sont exécutées, amènent en outre le dispositif informatique à :
capturer, au moyen de l'appareil photographique, au moins une image correspondant à l'utilisateur ; et
déterminer un angle d'incidence entre la ligne de visée de l'utilisateur et l'écran en analysant l'au moins une image correspondant à l'utilisateur,
la deuxième région reposant au moins en partie sur l'angle d'incidence.

15. Dispositif informatique selon la revendication 11, dans lequel l'élément d'interface comprend une touche d'un clavier virtuel.
